# EUROPÄISCHE PATENTANMELDUNG

(11) **EP 1 384 907 A2**
(43) Veröffentlichungstag der Anmeldung: **28.01.2004**
(21) Anmeldenummer: 03450158.5
(22) Anmeldetag: 27.06.2003
(51) Int. Cl.: F16C 33/30

(54) **Vorrichtung zur gegenseitigen drehbaren Lagerung zweier Platten**

(30) Priorität: 25.07.2002 AT 50102 U
(71) Anmelder: Hodry Metallwarenfabrik R.Hoppe Ges.m.b.H & Co. KG, 3430 Tulln (AT)
(72) Erfinder: Moldovan, Adrian, 1190 Wien (AT)
(74) Vertreter: Rippel, Andreas

(57) **Zusammenfassung**

Bei einer Vorrichtung zur gegenseitigen drehbaren Lagerung zweier Platten (1, 2) ist ein Wälzlager (3) in mindestens einem Ring (5, 6) gehalten.

An den beiden Platten (1, 2) sind konzentrisch zum Wälzlager (3) gegen die andere Platte (2, 1) gerichtete Vorsprünge (7, 8) angeordnet, von denen die Vorsprünge (7) der einen Platte (1) außen gegen den entsprechenden Ring (6), die Vorsprünge (8) der anderen Platte (2) innen gegen den entsprechenden Ring (5) anliegen.

Dadurch wird eine sichere Halterung auch bei auftretenden Querkräften erreicht.

## Beschreibung

Die Erfindung bezieht sich auf eine Vorrichtung zur gegenseitigen drehbaren Lagerung zweier Platten mittels eines Wälzlagers, das in mindestens einem Ring gehalten ist.

Derartige Vorrichtungen werden in verschiedenen Anwendungsfällen verwendet. So können Tischplatten drehbar auf einem Untergestell gelagert sein. Auch bei Fernsehgeräten ist oft eine drehbare Anordnung erwünscht. Ebenso können Speisen und Getränke auf einem Drehteller angeordnet sein, um dem Gast die jeweils gewünschte Speise oder das Getränk in Reichweite zu bringen. Schließlich können aber auch bei der Fertigung von Werkstücken solche Vorrichtungen zur Anwendung kommen, damit der Arbeiter das von ihm zu bearbeitende Werkstück in Griffnähe hat.

Bei einer bekannten Vorrichtung der eingangs genannten Art besteht das Wälzlager aus Kugeln, die in einem Ring gehalten sind, der in einer kreisförmigen Vertiefung der einen Scheibe geführt ist. Es hat sich gezeigt, daß eine solche Vorrichtung, aber auch andere bekannte Vorrichtungen nicht für eine Belastung durch auftretende Querkräfte geeignet ist, sodaß die Vorrichtung nach kurzer Zeit extremes Spiel aufweist.

Die Erfindung hat es sich zum Ziel gesetzt, eine Vorrichtung zur gegenseitigen drehbaren Lagerung zweier Platten mittels eines Wälzlagers zu schaffen, die insbesondere auch geeignet ist, auftretende größere Querkräfte aufzunehmen.

Erreicht wird dies dadurch, daß von den beiden Platten konzentrisch zum Wälzlager gegen die andere Platte gerichtete Vorsprünge angeordnet sind, von denen die Vorsprünge der einen Platte außen gegen den entsprechenden Ring, die Vorsprünge der anderen Platte innen gegen den entsprechenden Ring anliegen.

Bei einer erfindungsgemäßen Vorrichtung werden zufolge der angeordneten Vorsprünge Querkräfte sicher aufgenommen, die Nachteile der bekannten Vorrichtungen werden daher vermieden.

Bei einer zweckmäßigen Ausführungsform der Erfindung weist das Wälzlager Wälzkörper, insbesondere Zylinder oder Nadeln auf, die an den Platten anliegen und zwischen einem Innenring und einem Außenring angeordnet sind. Dadurch wird eine besonders einfache Anordnung erreicht und auch die Montage einer Vorrichtung nach der Erfindung wird vereinfacht.

Eine Ausführungsform der Erfindung zeichnet sich dadurch aus, daß die Platten aus Metall bestehen und die Vorsprünge als aus dem Metall herausgedrückte Verformungen ausgebildet sind.

Um ein Nachstellen bzw. Einstellen der Vorrichtung zu ermöglichen, ist nach der Erfindung vorgesehen, daß die beiden Platten durch eine als Achse dienende Schraube mit Sicherungsmutter verbunden sind.

Nachstehend ist die Erfindung anhand eines in den Zeichnungen dargestellten Ausführungsbeispieles näher beschrieben ohne auf dieses Beispiel beschränkt zu sein. Dabei zeigen:

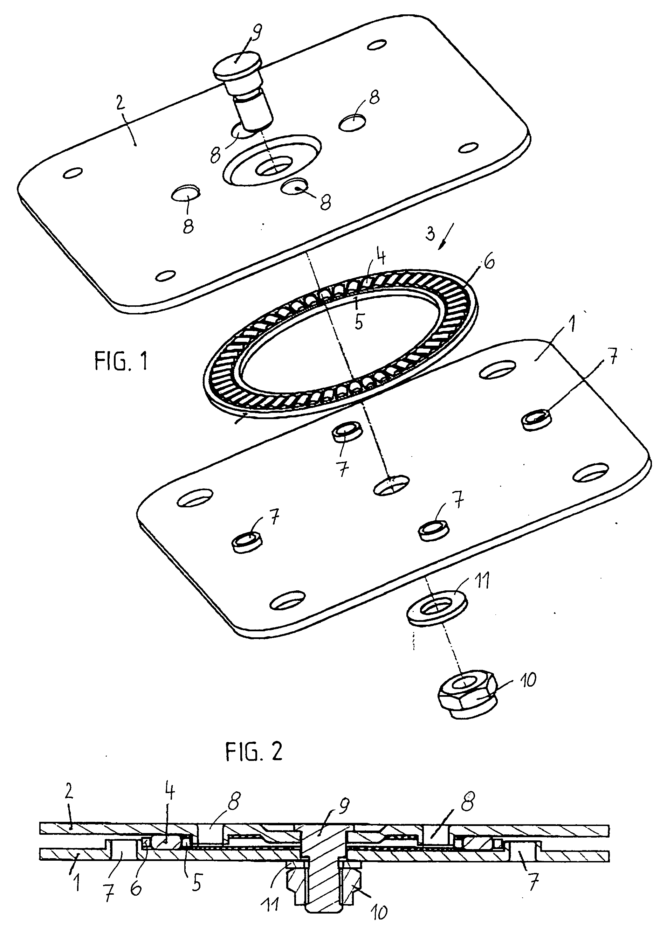

Fig. 1: eine Expositionszeichnung einer erfindungsgemäßen Vorrichtung und
Fig. 2 stellt einen Schnitt durch diese Vorrichtung dar.

Gemäß den Zeichnungen sind zwei Platten 1 und 2 mittels eines Wälzlagers 3 gegenseitig drehbar gelagert. Das Wälzlager 3 weist Wälzkörper 4 auf, die im Beispiel zylindrisch oder nadelförmig ausgebildet sind. Gehalten werden die Wälzkörper 4 durch einen Innenring 5 und einen Außenring 6.

Die Platten 1 und 2 bestehen im gezeichneten Ausführungsbeispiel aus Metall aus welchem bei beiden Platten 1 und 2 Verformungen 7 und 8 herausgedrückt sind. In der Fachsprache werden derartige Verformungen auch "Düsen" genannt. Die Verformungen 7, im Beispiel vier, liegen gegen den Außenring 6, die Verformungen 8, im Beispiel vier, gegen den Innenring 5 an. Auf diese Weise wird das Wälzlager 3 zentriert und insbesondere können Querkräfte sicher aufgenommen werden.

Als Achse ist eine Schraube 9 mit einer Sicherungsmutter 10 und einer Beilagscheibe 11 angeordnet.

Im Rahmen der Erfindung sind zahlreiche Abänderungen möglich. So müssen die Platten 1 und 2 nicht aus Metall bestehen und auch nicht als "Platten" im engeren Sinne des Wortes ausgebildet sein. Die Vorsprünge 7 und 8 könnten z.B. aus vorstehenden Bolzen bestehen und das Wälzlager könnte als Wälzkörper auch Kugeln aufweisen.

## Patentansprüche

1. Vorrichtung zur gegenseitigen drehbaren Lagerung zweier Platten (1, 2) mittels eines Wälzlagers (3), das in mindestens einem Ring (5, 6) gehalten ist, **dadurch gekennzeichnet, daß** an den beiden Platten (1,2) konzentrisch zum Wälzlager (3) gegen die andere Platte (2, 1) gerichtete Vorsprünge (7, 8) angeordnet sind, von denen die Vorsprünge (7) der einen Platte (1) außen gegen den entsprechenden Ring (6), die Vorsprünge (8) der anderen Platte (2) innen gegen den entsprechenden Ring (5) anliegen.

2. Vorrichtung nach Anspruch 1, **dadurch gekennzeichnet, daß** das Wälzlager (3) Wälzkörper (4), insbesondere Zylinder oder Nadeln, aufweist, die an den Platten (1, 2) anliegen und zwischen einem Innenring (5) und einem Außenring (6) angeordnet sind.

3. Vorrichtung nach Anspruch 2, **dadurch gekennzeichnet, daß** die Platten (1, 2) aus Metall bestehen und die Vorsprünge (7, 8) als aus dem Metall herausgedrückte Verformungen ausgebildet sind.

4. Vorrichtung nach einem der Ansprüche 1 bis 3, **dadurch gekennzeichnet, daß** die beiden Platten (1, 2) durch eine als Achse dienende Schraube (9) mit Sicherungsmutter (10) verbunden sind.
